(19) Europäisches Patentamt
European Patent Office
Office européen des brevets

(11) Publication number: **0 349 288 B1**

(12) **EUROPEAN PATENT SPECIFICATION**

(45) Date of publication of patent specification: **28.12.94**   (51) Int. Cl.⁵: **B32B 27/18**, B65D 65/40, B32B 5/18

(21) Application number: **89306551.6**

(22) Date of filing: **27.06.89**

(54) **Heat-resistant composite sheet and container made thereof.**

(30) Priority: **29.06.88 JP 161458/88**

(43) Date of publication of application:
**03.01.90 Bulletin 90/01**

(45) Publication of the grant of the patent:
**28.12.94 Bulletin 94/52**

(84) Designated Contracting States:
**AT BE CH DE ES FR GB GR IT LI LU NL SE**

(56) References cited:
**EP-A- 0 128 425**
**FR-A- 2 267 005**

(73) Proprietor: **POLYPLASTICS CO. LTD.**
**3-13, Azuchicho, 2-chome**
**Chuo-Ku**
**Osaka-shi**
**Osaka 541 (JP)**

(72) Inventor: **Nedzu, Shigeru**
**324 Miyashita**
**Fuji-shi**
**Shizuoka (JP)**

(74) Representative: **Jackson, Peter et al**
**HYDE, HEIDE & O'DONNELL**
**10-12 Priests Bridge**
**London SW15 5JE (GB)**

EP 0 349 288 B1

## Description

The present invention relates to a heat-resistant composite sheet and a heat-resistant container made of this sheet. More particularly, the present invention relates to a composite sheet for a heat-resistant container, which can withstand heating in a microwave oven or the like without detriment to the taste or flavour of the food cooked therein and which retains excellent heat insulation after the heating and also to a heat-resistant container made of this composite sheet.

European patent application EP-A-128425 (Fukuyama Pearl Shiko KK) describes a food packaging container which can withstand heating in a microwave oven. It is formed of a laminate sheet material comprising a non-stretched polyethylene terephthalate film or sheet laminated on the interior side of a foamed polystyrene sheet.

Containers made of a foamed polystyrene sheet having excellent properties in light weight, heat resistance, rigidity and buffering having been extensively used as containers for fast foods such as hamburgers, fried chicken and pre-packed lunches and as containers for instant foods such as precooked Chinese noodles and soup mix. These containers are prepared by heat-forming of a foamed polystyrene sheet alone or a composite sheet comprising a laminate of a foamed polystyrene sheet and other resin film. Since, however, these containers have various defects, they are not fully satisfactory as food containers. More specifically, since a foamed polystyrene sheet alone or a composite sheet composed of a polystyrene resin film and a foamed polystyrene sheet has poor heat resistance, a food packaged in a container made thereof cannot be directly heated for cooking in a microwave oven, and because of an inherent smell of polystyrene, its use is considerably limited. Although a composite sheet comprising a laminate of a foamed polystyrene sheet with a polyethylene resin film or polypropylene resin film is improved in heat resistance to some extent over the above-mentioned laminate sheet, the heat resistance is insufficient to withstand the temperatures, often exceeding 100°C, imposed on a container of an oily food when heated in a microwave oven. Moreover, the above-mentioned olefins have a strong, so-called olefinic smell so that they might impair the taste or flavour of the food unfavorably. A composite sheet composed of a foamed polystyrene sheet and a non-oriented polyethylene terephthalate film is advantageous in that the taste and flavor of the food are not impaired, but the heat resistance is poor. A composite sheet composed of a foamed polystyrene sheet and a biaxially or monoaxially oriented polyethylene terephthalate film has excellent heat resistance and has neither taste nor smell, but when this composite sheet is heat-formed, the polyethylene terephthalate film layer causes deterioration or is broken so that no container can be satisfactorily prepared and the composite sheet is still insufficient as the composite sheet for a heat-resistant container.

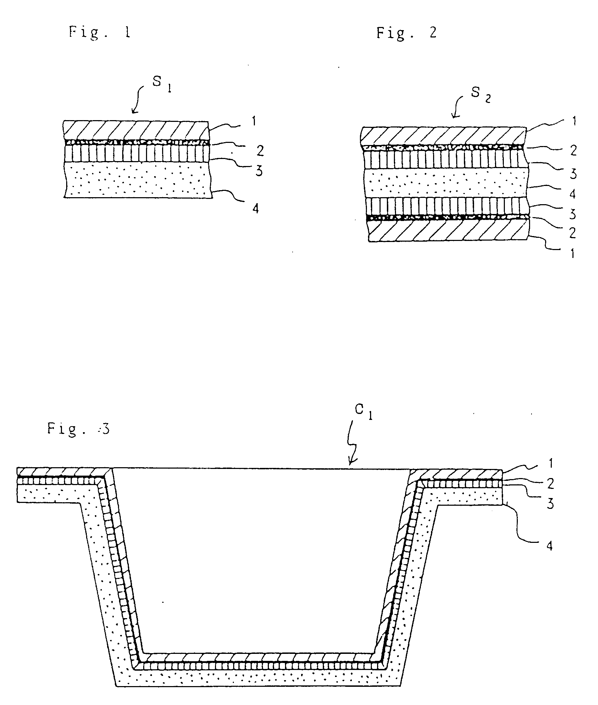

Fig.1 is a diagrammatic sectional view of an example of the heat-resistant composite sheet of the present invention, Fig.2 is a diagrammatic sectional view of another example of the heat-resistant composite sheet of the present invention, and Fig.3 is a diagrammatic sectional view of a heat-resistant container obtained by forming the heat-resistant composite sheet shown in Fig.1.

In the accompanying figures the reference letters and numerals designate the following: S1, S2: composite sheet, 1: polybutylene terephthalate resin film, 2: adhesive layer, 3: polystyrene resin film, 4: foamed polystyrene sheet, C1: heat-resistant container.

(Disclosure of the Invention)

We have made investigations with a view to solving the foregoing problems and have found that a polybutylene terephthalate resin film has high heat resistance and rigidity, excellent formability, low oxygen permeability and excellent flavor retention and does not impair the taste or smell of the food in contact therewith because this film has neither taste nor smell. We have also found that a composite sheet composed either of a foamed polystyrene sheet and a polybutylene terephthalate resin film, or of a foamed polystyrene sheet, a polystyrene resin film and a polybutylene terephthalate resin film is excellent in its resistance and heat-insulating property and has a good formability into a container, and that since the oxygen permeability of the composite sheet is low, a container made of this composite sheet is excellent for food preservation. We have now completed the present invention based on these findings.

More specifically, in accordance with the present invention, there is provided a heat-resistant composite sheet composed, as the main constituents, either of a foamed polystyrene sheet and a polybutylene terephthalate resin-film, or of a foamed polystyrene sheet, a polystyrene resin film and a polybutylene terephthalate resin film, wherein the polybutylene terephthalate resin film layer is laminated to form both or one of the outer layers.

The invention thus provides a heat-resistant composite sheet composed of a foamed polystyrene sheet and a layer of polybutylene terephthalate resin film as main constituents, wherein the polybutylene terephthalate film layer is laminated to form one or both of the outer layers. The invention further provides such a heat-resistant composite sheet which includes a polystyrene resin film as a further main constituent.

The composite sheets according to the invention show excellent heat resistance and heat-insulating property in their use and have good formability into containers. The invention accordingly also provides a heat resistant container formed of a composite sheet as described and claimed herein.

As the construction for attaining the object of the present invention, there can be mentioned a three-layer structure comprising a polybutylene terephthalate resin film 1, a polystyrene resin film 3 and a foamed polystyrene sheet 4, which are laminated in this order as shown in Fig. 1, and a five-layer structure comprising a polybutylene terephthalate resin film 1, a polystyrene resin film 3, a foamed polystyrene sheet 4, a polystyrene resin film 3 and a polybutylene terephthalate resin film 1, which are laminated in this order as shown in Fig. 2. At any rate, it is indispensable in the present invention that the respective layers should be laminated so that the polybutylene terephthalate resin film forms both or one of the outer layers.

In the step of forming this composite sheet into a container, it is indispensable that the polybutylene terephthalate resin film should be located on the inner side of the container. In the container thus constructed, a food contained therein can be directly heated for cooking in a microwave oven, and therefore the container is especially suitable for one to be treated in a microwave oven. Moreover, since this container is excellent in the heat-insulating property, the cooked food can be kept warm for a long time after cooking, and the container can be held by the bare hand even if the temperature of the contained food is high. Furthermore, the container is advantageous in that the flavor retention is good and heat sealing is possible.

The polybutylene terephthalate referred to in the present invention is a polyester obtained by condensing 1,4-butanediol with terephthalic acid or a lower alcohol ester thereof. A copolymer composed mainly of polybutylene terephthalate can also be used.

Either the inflation process or the T-die process can be adopted for forming this polybutylene terephthalate into a film, but in case of the inflation process, it is preferred from the viewpoint of the productivity of a film that a polybutylene terephthalate resin having an inherent viscosity of at least 1.0 be used.

In the present invention, either an oriented film or a non-oriented film can be used as the polybutylene terephthalate resin film, but in view of the fact that the so-called deep drawing is carried out for formation of a container, it is indispensable that the elongation at the deep drawing temperature (100 to 120°C) should be at least about 200%, and from this viewpoint, the use of a non-oriented film is especially preferred. Also an oriented film can be used if the draw ratio is lower than 1.5.

The polybutylene terephthalate resin may contain known substances to be incorporated into ordinary thermoplastic and thermosetting resins, for example, plasticizers, stabilizers such as antioxidants and ultraviolet absorbers, antistatic agents, surface active agents, colorants such as dyes and pigments, lubricants for improving the flowability, and crystallization promoters (nucleating agents) according to required properties, so far as the object of the present invention can be attained, namely, when these substances are not extracted by the contained food or do not contaminate the contained food when heat cooking is effected in a microwave oven where the food is in contact with the container. Furthermore, a small amount of other thermoplastic resin or an inorganic filler may be auxiliarily used according to need, so far as the attainment of the intended effects of the present invention is not hindered.

Foamed polystyrene sheets customarily used for formation of packages or the like can be used in the present invention, and the kind of the foamed polystyrene sheet is not particularly critical. For example, there can be used a foamed polystyrene sheet obtained by foaming and molding formable polystyrene beads comprising a lower hydrocarbon, such as butane, pentane or hexane, absorbed in a polystyrene resin or a copolymer or blend thereof with other thermoplastic resin, and a foamed sheet obtained by melt-kneading a polystyrene resin with a foaming agent as mentioned above directly in an extruder to effect foaming.

In general, a foamed polystyrene sheet having a foaming ratio of 30 to 50, which is prepared by the above-mentioned process, is often used for packages or the like.

The kind of the polystyrene resin film used in the present invention is not particularly critical. Polystyrene resin films customarily used for formation of packages can be used in the present invention.

In the foamed sheet, an unfoamed film of a thermoplastic resin such as a high-impact polystyrene film can be laminated on the surface on the side to which the polybutylene terephthalate resin film is not bonded.

An adhesive customarily used for an ordinary synthetic resin sheet or film can be used for lamination of the polybutylene terephthalate film and the polystyrene resin film in the present invention, and a urethane adhesive is preferably used. A so-called dry lamination process is preferably adopted as the lamination process.

In Figures 1,2 and 3, the reference numbers 2 indicate layers of urethane adhesive between the layers 1 and 3 of polybutylene terephthalate and polystyrene film respectively.

The composite film formed by laminating the polybutylene terephthalate resin film and the polystyrene resin film according to the above-mentioned process can be laminated with the foamed polystyrene sheet by a hot roll or the like even without using any adhesive. However, in this case, a foamed polystyrene sheet not having any other thermoplastic resin film laminated on the lamination side should be used. The polybutylene terephthalate resin film can be directly laminated on the foamed polystyrene sheet according to the intended use, but it is preferred in view of the adhesiveness and the bonding method that the polybutylene terephthalate resin film be bonded to the polystyrene film in advance and the foamed polystyrene sheet be then bonded and laminated to the polystyrene film side.

In the present invention, the thickness of the composite sheet is not particularly critical. However, in view of the use of a container for heating food in a microwave oven, the formability into a container and the heat resistance of the container, the overall thickness of the composite sheet is adjusted to 0.5 to 7 mm, preferably 0.8 to 3 mm, and the thickness of the polybutylene terephthalate resin film is preferably 5 to 200 $\mu$m.

When a polybutylene terephthalate resin film is bonded as a lid member to the container of the present invention, the oxygen permeability can be further reduced, and a container having excellent long-term food preserving properties can be provided.

(Examples)

Example 1

A non-oriented polybutylene terephthalate resin film (having a thickness of 30 $\mu$m) formed by T-die extrusion was laminated on a polystyrene resin film (having a thickness of 20 $\mu$m) by the dry lamination process. The laminated film was further laminated on a foamed polystyrene resin sheet (PSP) having a thickness of 1.5 mm by a hot roll so that the polybutylene terephthalate resin film layer would form an outermost layer. The obtained laminate as shown in Fig.1 was formed at 110°C into a container as shown in Fig.3 by a hot press so that the polybutylene terephthalate resin film layer was located on the inner side. A commercially available food was packed in the container and the heat resistance test was carried out by heating the food in a microwave oven. The change of the food flavour by heating was examined. The obtained results are shown in Table 1.

In the heat resistance test, the heat resistance was evaluated according to the following criteria based on the degree of deformation of the container.

O: no deformation
△: slight deformation
X: conspicuous deformation

The flavor of the heated food was evaluated according to the following criteria.

O: no polymer smell
△: slight polymer smell
X: polymer smell

Example 2

A polybutylene terephthalate resin film having a thickness of 30 $\mu$m, obtained by the inflation process, was laminated on a polystyrene resin film (having a thickness of 20 $\mu$m) through a urethane adhesive by the dry lamination process. The obtained laminated film was further laminated on a foamed polystyrene sheet (PSP) having a thickness of 1.5 mm by a hot roll so that the polybutylene terephthalate resin film layer would form an outermost layer. A container similar to the one obtained in Example 1 was obtained by heat-forming the obtained laminate so that the polybutylene terephthalate resin film was located on the inner side. The obtained container was tested in the same manner as the one described in Example 1. The obtained results are shown in Table 1.

Comparative Example 1

A non-oriented polypropylene resin film (having a thickness of 30 $\mu$m) was laminated on a polystyrene resin film (having a thickness of 20 $\mu$m) according to the dry lamination process. The laminated film was further laminated on a foamed polystyrene sheet (PSP) having a thickness of 1.5 mm by a hot roll so that the polypropylene resin film would form an outermost layer. A container was prepared by heat-forming the laminate so that the polypropylene resin film layer was located on the inner side. The container was tested in the same manner as the one described in Example 1. The obtained results are shown in Table 1.

Comparative Example 2

A container was prepared in the same manner as the one described in Comparative Example 1 except that a non-oriented polyethylene resin film was used instead of the non-oriented polypropylene resin film (having a thickness of 30 $\mu$m). The obtained container was tested in the same manner as that described in Example 1. The obtained results are shown in Table 1.

Comparative Example 3

A container was prepared in the same manner as the one described in Comparative Example 1 except that a non-oriented polyethylene terephthalate resin film was used instead of the non-oriented polypropylene resin film (having a thickness of 30 $\mu$m). The obtained container was tested in the same manner as that described in Example 1. The obtained results are shown in Table 1.

5

Table 1

| Construction of container [*1] | | Ex. 1 PBT/PS/PSP | | Ex. 2 PBT/PS/PSP | | Comp. Ex. 1 CPP/PS/PSP | | Comp. Ex. 2 LDPE/PS/PSP | | Comp. Ex. 3 PET/PS/PSP | |
|---|---|---|---|---|---|---|---|---|---|---|---|
| Cooked food | Cooking time | degree of deformation | smell | degree of deformation | smell | degree of deformation | smell | degree of deformation | smell | degree of deformation | smell |
| water (100 g) | 10 min. | ○ | ○ | ○ | ○ | ○ | △ | ○ | △ | △ | ○ |
| salad oil (30 g) | 5 min. | ○ | ○ | ○ | ○ | △ | △ | × | × | × | ○ |
| cream stew (100 g) | 2 min. | ○ | ○ | ○ | ○ | ○ | △ | × | × | × | ○ |
| pork cutlet (100 g) | 2 min. | ○ | ○ | ○ | ○ | ○ | △ | × | △ | △ | ○ |
| spaghetti (100 g) | 2 min. | ○ | ○ | ○ | ○ | ○ | △ | × | × | × | ○ |
| meat ball (100 g) | 2 min. | ○ | ○ | ○ | ○ | ○ | △ | × | × | △ | ○ |

[*1]
PBT: non-oriented polybutylene terephthalate film
PS: polystyrene film
PSP: foamed polystyrene sheet
CPP: non-oriented polypropylene film
LDPE: low-density polyethylene film
PET: non-oriented polyethylene terephthalate film

## Example 3

The container obtained in Example 1 was filled with salad oil, and a lid made of the same non-oriented polybutylene terephthalate resin film (having a thickness of 30 $\mu$m) as that used for the container was heat-sealed to the container. Then the container was stored for 6 months in an atmosphere maintained at a temperature of 30°C and a relative humidity of 60%. Then the container was opened and the degree of deterioration of the salad oil was examined. Furthermore, the oxygen permeability of the container was measured. The obtained results are shown in Table 2.

## Example 4

The container obtained in Example 2 was filled with salad oil, and a lid made of the same non-oriented polybutylene terephthalate resin film (having a thickness of 30 $\mu$m) as the one used for the container was heat-sealed to the container. Then the container was stored for 6 months in an atmosphere maintained at a temperature of 30°C and a relative humidity of 60%. The container was then opened and the degree of deterioration of the salad oil was examined. Furthermore, the oxygen permeability of the container was measured. The obtained results are shown in Table 2.

## Comparative Examples 4 and 5

In the same manner as that described in Example 3, each of the containers obtained in Comparative Examples 1 and 2 was filled with salad oil, and a lid made of a non-oriented polybutylene terephthalate resin film (having a thickness of 30 $\mu$m) prepared according to the T-die process was attached to each container. The degree of deterioration was examined in the same manner as the one described in Example 3, and the oxygen permeability of each container was measured. The obtained results are shown in Table 2.

## Comparative Example 6

In the same manner as the one described in Example 3, the container used in Example 1 was filled with salad oil, and a lid member made of a non-oriented polyethylene resin film (having a thickness of 30 $\mu$m) was attached to the container. In the same manner as that described in Example 3, the degree of deterioration was examined, and the oxygen perpeability was measured. The obtained results are shown in Table 2.

Table 2

| | Ex. 3 | Ex. 4 | Comp. Ex. 4 | Comp. Ex. 5 | Comp. Ex. 6 |
|---|---|---|---|---|---|
| Construction of container | PBT/PS/PSP | PBT/PS/PSP | CPP/PS/PSP | LDPE/PS/PSP | PBT/PS/PSP |
| Lid member | PBT (T-die process) | PBT (T-die process) | PBT (T-die process) | PBT (T-die process) | LDPE (inflation process) |
| Degree of deterioration of salad oil | no deterioration | no deterioration | slight deterioration | deterioration | deterioration |
| Oxygen permeability of container*4 (cc/m²·day·atm) | 99 | 61 | 1100 | 4500 | 5500 |

*4 oxygen permeability: measured according to ASTM D-1434 by using a gas permeability tester mfd. by Toyo Seiki.

## Claims

1. A heat-resistant composite sheet composed of a foamed polystyrene sheet and a layer of polybutylene terephthalate resin film as main constituents, wherein the polybutylene terephthalate film layer is

8

laminated to form one or both of the outer layers.

2. A heat-resistant composite sheet as set forth in claim 1, which includes a polystyrene resin film as a further main constituent.

3. A heat-resistant composite sheet as set forth in claim 1 or claim 2, wherein a urethane resin is used for lamination of the polybutylene terephthalate film and the polystyrene resin film.

4. A heat-resistant composite sheet as set forth in any preceding claim, wherein the polybutylene terephthalate film is formed by the inflation process from a polybutylene terephthalate resin having an inherent viscosity of at least 1.0.

5. A heat-resistant composite sheet as set forth in any preceding claim, wherein the polybutylene terephthalate is in the form of a non-oriented film.

6. A heat-resistant composite sheet as set forth in any preceding claim, wherein the thickness of the polybutylene terephthalate resin film is 5 to 200 $\mu$m and the overall thickness of the composite sheet is 0.5 to 7mm.

7. A heat-resistant composite sheet as set forth in claim 6, wherein the overall thickness of the composite sheet is 0.8 to 3mm.

8. A heat-resistant composite sheet as set forth in any preceding claim, which has been laminated by a dry lamination process.

9. A heat-resistant container made of a heat-resistant composite sheet as set forth in any preceding claim, wherein the composite sheet is arranged so that the polybutylene terephthalate film layer of the composite sheet is located on the inner side of the container.

10. A heat-resistant container as set forth in claim 9, wherein a lid member composed of a polybutylene terephthalate resin film as the main constituent is bonded to the container.

**Patentansprüche**

1. Hitzebeständige Verbundfolie, die aus einer geschäumten Polystyrol-Folie und einer Schicht aus Polybutylenterephthalat-Harzfilm als Hauptbestandteile besteht, wobei die Schicht aus Polybutylenterephthalat-Film laminiert ist, um eine oder beide der äußeren Schichten zu bilden.

2. Hitzebeständige Verbundfolie nach Anspruch 1, die als weiteren Hauptbestandteil einen Polystyrol-Harzfilm einschließt.

3. Hitzebeständige Verbundfolie nach Anspruch 1 oder Anspruch 2, wobei zum Laminieren des Polybutylenterephthalat-Films und des Polystyrol-Films ein Urethanharz verwendet wird.

4. Hitzebeständige Verbundfolie nach einem der vorhergehenden Ansprüche, wobei der Polybutylenterephthalat-Film aus einem Polybutylenterephthalat-Harz mit einer inherenten Viskositätszahl von wenigstens 1,0 mit Hilfe des Blas-Verfahrens hergestellt wird.

5. Hitzebeständige Verbundfolie nach einem der vorhergehenden Ansprüche, wobei das Polybutylenterephthalat in Form eines nicht orientierten Films vorliegt.

6. Hitzebeständige Verbundfolie nach einem der vorhergehenden Ansprüche, wobei die Dicke des Harzfilms aus Polybutylenterephthalat 5 bis 200 $\mu$m und die Gesamtdicke der Verbundfolie 0,5 bis 7 mm beträgt.

7. Hitzebeständige Verbundfolie nach Anspruch 6, wobei die Gesamtdicke der Verbundfolie 0,8 bis 3 mm beträgt.

**8.** Hitzebeständige Verbundfolie nach einem der vorhergehenden Ansprüche, die durch ein trockenes Laminierungs-Verfahren laminiert wurde.

**9.** Aus hitzebeständiger Verbundfolie nach einem der vorhergehenden Ansprüche hergestellter hitzebeständiger Behälter, wobei die Verbundfolie so angeordnet ist, daß sich die Polybutylenterephthalat-Filmschicht der Verbundfolie auf der Innenseite des Behälters befindet.

**10.** Hitzebeständiger Behälter nach Anspruch 9, wobei ein Deckelteil, das aus einem Polybutylenterephthalat-Harzfilm als Hauptbestandteil besteht, mit dem Behälter verbunden ist.

**Revendications**

**1.** Une feuille composite résistante à la chaleur composée d'une feuille de polystyrène expansée et d'une couche de pellicule de résine de polytéréphthalate de butylène comme constituants principaux, dans laquelle la couche de pellicule de polytéréphthalate de butylène est stratifiée pour former une des couches extérieures ou les deux.

**2.** Une feuille composite résistante à la chaleur telle qu'elle est définie dans la revendication 1, qui inclut une pellicule de résine de polystyrène comme constituant principal supplémentaire.

**3.** Une feuille composite résistante à la chaleur telle qu'elle est définie dans la revendication 1 ou la revendication 2, dans laquelle une résine d'uréthane est utilisée pour la stratification de la pellicule de résine de polytéréphthalate de butylène et de la pellicule de résine de polystyrène.

**4.** Une feuille composite résistante à la chaleur telle qu'elle est définie dans n'importe quelle revendication précédente, dans laquelle la pellicule de polytéréphthalate de butylène est formée par le procédé de soufflage d'une résine de polytéréphthalate de butylène ayant une viscosité inhérente d'au moins 1,0.

**5.** Une feuille composite résistante à la chaleur telle qu'elle est définie dans n'importe quelle revendication précédente, dans laquelle le polytéréphtalate de butylène est sous la forme d'une pellicule non orientée.

**6.** Une feuille composite résistante à la chaleur telle qu'elle est définie dans n'importe quelle revendication précédente, dans laquelle l'épaisseur de la pellicule de résine de polytéréphthalate de butylène va de 5 à 200 $\mu$m et l'épaisseur totale de la feuille composite va de 0,5 à 7 mm.

**7.** Une feuille composite résistante à la chaleur telle qu'elle est définie dans la revendication 6, dans laquelle l'épaisseur totale de la feuille composite va de 0,8 à 3mm.

**8.** Une feuille composite résistante à la chaleur telle qu'elle est définie dans n'importe quelle revendication précédente, qui a été stratifiée par un procédé de stratification par voie sèche.

**9.** Un récipient résistant à la chaleur fait d'une feuille composite résistante à la chaleur telle que définie dans n'importe quelle revendication précédente, dans lequel la feuille composite est disposée de telle sorte que la couche de pellicule de polytéréphthalate de butylène de la feuille composite soit placée sur le côté interne du récipient.

**10.** Un récipient résistant à la chaleur tel qu'il est défini dans la revendication 9, dans lequel un couvercle composé d'une pellicule de résine de polytéréphthalate de butylène comme constituant principal est lié au récipient.

Fig. 1

Fig. 2

Fig. 3